# EUROPEAN PATENT APPLICATION

(11) **EP 3 127 926 A1**
(43) Date of publication of application: **08.02.2017**
(21) Application number: 15773847.7
(22) Date of filing: 31.03.2015
(51) Int. Cl.: C08F 8/22, C08F 14/06

(54) **PRODUCTION METHOD FOR CHLORINATED VINYL CHLORIDE RESIN**

(30) Priority: 31.03.2014 JP 2014073767
(71) Applicant: Sekisui Chemical Co., Ltd., Osaka-shi, Osaka 530-0047 (JP); Tokuyama Sekisui Co., Ltd., Osaka-shi, Osaka 530-0047 (JP)
(72) Inventor: MATSUMURA Kenichi, Shunan-shi Yamaguchi 746-0006 (JP); MASHINO Norikazu, Shunan-shi Yamaguchi 746-0006 (JP)
(74) Representative: Hart-Davis, Jason
(86) International application number: PCT/JP2015/060173
(87) International publication number: WO 2015/152260

(57) **Abstract**

The present invention provides a method for producing a chlorinated polyvinyl chloride which is excellent in thermal stability (initial discoloration resistance, heat-resistant stability) and is capable of providing a transparent article. The present invention relates to a method for producing a chlorinated polyvinyl chloride through thermal chlorination of a reaction solution including a vinyl chloride aqueous suspension that contains a vinyl chloride resin in a hermetically sealable reaction vessel, the method including: step 1 of initiating thermal chlorination by heating the reaction solution to 55°C to 70°C and then introducing chlorine into the reaction vessel; step 2 of raising the temperature of the reaction solution while maintaining the temperature inside the reaction vessel not higher than the glass transition temperature of a partially chlorinated polyvinyl chloride; and step 3 of carrying out the thermal chlorination at a predetermined temperature of 85°C or higher but lower than 115°C after the chlorine content of the partially chlorinated polyvinyl chloride reaches 58% by weight or more, the steps 1 to 3 being performed under stirring at a net stirring power (Pv) inside the reaction vessel of 0.2 to 2.5 kw/m³ per 1 m³ of the reaction solution.

## Description

### TECHNICAL FIELD

The present invention relates to a method for producing a chlorinated polyvinyl chloride which has high initial discoloration resistance and heat-resistant stability to be excellent in thermal stability and is capable of providing a transparent article.

### BACKGROUND ART

A chlorinated polyvinyl chloride is produced by afterchlorination of a vinyl chloride resin and has excellent properties of the vinyl chloride resin including weather resistance, flame retardancy, and chemical resistance. In addition, a chlorinated polyvinyl chloride has a heat distortion temperature higher than that of a vinyl chloride resin by 20°C to 40°C, and therefore is suitably used in applications that require heat resistance up to 100°C, such as heat-resistant pipes, heat-resistant fittings, heat-resistant valves, and heat-resistant plates.

Because of its high heat distortion temperature, however, a chlorinated polyvinyl chloride needs to be heated at high temperatures to be molten for molding into a heat-resistant pipe, a heat-resistant fitting, a heat-resistant valve, a heat-resistant plate, or the like. In this context, a chlorinated polyvinyl chloride with poor thermal stability (initial discoloration resistance, heat-resistant stability) cannot be molded into a transparent article.

In a conventionally employed method for afterchlorination of a vinyl chloride resin, an aqueous suspension of a vinyl chloride resin is prepared in a hermetically sealable reaction vessel and then chlorine is injected thereinto under irradiation with UV light. For the purpose of obtaining a chlorinated polyvinyl chloride with excellent thermal stability, a chlorination method only by a heat treatment (thermal chlorination) without UV irradiation has been recently proposed. Moreover, for the purpose of shortening the reaction time, a chlorination method in which hydrogen peroxide is added in thermal chlorination has been proposed.

Patent Literature 1, for example, discloses a method of chlorinating polyvinyl chloride including the steps of suspending polyvinyl chloride in an aqueous medium in a hermetically sealable vessel, decompressing the vessel, and chlorinating the polyvinyl chloride by introducing chlorine into the vessel at 90° to 140°C, wherein addition of hydrogen peroxide to the polyvinyl chloride is started at a rate of 5 to 50 ppm/hr when the chlorine content of the reacting polyvinyl chloride reaches 60% by weight or higher in the chlorination step.

According to the method described in Example 1 of Patent Literature 1, CPVC is obtained as follows. Specifically, a predetermined amount of deionized water and a predetermined amount of PVC are charged into a vessel, and the PVC is dispersed in the water with stirring. After performing heating and decompression, chlorine is introduced to initiate the reaction, and at the same time, the temperature of the suspension is increased. After the chlorine content reaches 61% by weight, a predetermined amount of a hydrogen peroxide solution is added. When the chlorine content reaches 65% by weight, chlorination is terminated, thereby preparing CPVC.

In the above chlorination method, however, the temperature is not controlled during a period from introduction of chlorine into the reaction vessel to initiate chlorination until the temperature is raised to reach the reaction temperature, and is simply raised to the reaction temperature as quickly as possible. In such a case, the resulting chlorinated polyvinyl chloride has poor thermal stability (initial discoloration resistance, heat-resistant stability), failing to provide a transparent article.

### CITATION LIST

### - Patent Literature

Patent Literature 1: JP 2001-151815 A

### SUMMARY OF INVENTION

### - Technical Problem

The present invention aims to provide a method for producing a chlorinated polyvinyl chloride that has high initial discoloration resistance and heat-resistant stability to have excellent thermal stability and is capable of providing a transparent article.

### - Solution to problem

The present invention relates to a method for producing a chlorinated polyvinyl chloride through thermal chlorination of a reaction solution including a vinyl chloride aqueous suspension that contains a vinyl chloride resin in a hermetically sealable reaction vessel, the method including: step 1 of initiating thermal chlorination by heating the reaction solution to 55°C to 70°C and then introducing chlorine into the reaction vessel; step 2 of raising the temperature of the reaction solution while maintaining the temperature inside the reaction vessel not higher than the glass transition temperature of a partially chlorinated polyvinyl chloride; and step 3 of carrying out the thermal chlorination at a predetermined temperature of 85°C or higher but lower than 115 °C after the chlorine content of the partially chlorinated polyvinyl chloride reaches 58% by weight or more, the steps 1 to 3 being performed under stirring at a net stirring power (Pv) inside the reaction vessel of 0.2 to 2.5 kw/m³ per 1 m³ of the reaction solution.

The present inventors found out that, in a method for producing a chlorinated polyvinyl chloride, setting the temperature during thermal chlorination and the net stirring power each within a predetermined range enables production of a chlorinated polyvinyl chloride that has high initial discoloration resistance and heat-resistant stability to be excellent in thermal stability and is capable of providing a transparent article. The present invention was thus completed.

The present invention relates to a method for producing a chlorinated polyvinyl chloride through thermal chlorination of a reaction solution including a vinyl chloride aqueous suspension that contains a vinyl chloride resin in a hermetically sealable reaction vessel.

The hermetically sealable reaction vessel is preferably a glass-lined pressure-resistant vessel equipped with a stirrer and a heating/cooling jacket.

Examples of the vinyl chloride resin include, in addition to a vinyl chloride homopolymer, a copolymer of a vinyl chloride monomer and a monomer copolymerizable with the vinyl chloride monomer.

The vinyl chloride copolymer of a vinyl chloride monomer and a monomer copolymerizable with the vinyl chloride monomer preferably contains 50% by weight or more of vinyl chloride monomers.

Examples of the monomer copolymerizable with vinyl chloride include vinyl esters such as vinyl acetate and vinyl propionate; (meth)acrylates such as methyl (meth)acrylate and ethyl (meth)acrylate; olefins such as ethylene and propylene; maleic anhydride; acrylonitrile; styrene; and vinylidene chloride.

The vinyl chloride resin commonly has an average degree of polymerization of 600 to 2000.

The vinyl chloride aqueous suspension refers to a suspension containing a vinyl chloride resin and water.

In order to suspend a vinyl chloride resin in water, vinyl chloride resin powder may be added to an aqueous medium and stirred to be dispersed and suspended. In a case where a vinyl chloride resin is obtained by aqueous suspension polymerization, the vinyl chloride resin can be used as it is because it is obtained in the form of an aqueous suspension.

The average particle size of the vinyl chloride resin powder is preferably 100 to 200 µm because too small powder is difficult to handle and too large powder takes a long time for chlorination.

The present invention includes step 1 of initiating thermal chlorination by heating the reaction solution to 55 °C to 70°C and then introducing chlorine into the reaction vessel.

Thermal chlorination as used herein refers to a reaction of thermally chlorinating a substance by a heat treatment without UV irradiation.

The thermal chlorination is preferably initiated as follows. Specifically, the hermetically sealable reaction vessel is decompressed for removal of oxygen, while heating. When the temperature of the reaction solution reaches 55°C to 70°C, chlorine is introduced into the reaction vessel to initiate thermal chlorination.

In the case of the decompression, the vessel is preferably deaerated by suction with a vacuum pump. In a preferable example, suction is carried out until the interior pressure of the reaction vessel reaches about the sum of the water vapor pressure at that time and the pressure corresponding to 20 mm of a mercury column, and the pressure is maintained for several minutes to achieve first deaeration; nitrogen is then injected into the reaction vessel, the system is left to stand for a while, and the second deaeration is performed by suction with a vacuum pump for removal of oxygen; and a series of these operations is repeated to make the oxygen level inside the reaction vessel to 100 ppm or lower.

The heating is preferably carried out with steam or hot water supplied into the jacket. When the temperature of the aqueous suspension reaches the temperature at which thermal chlorination is initiated, namely, 55°C to 70°C, chlorine is introduced into the reaction vessel to initiate thermal chlorination.

Highly pure chlorine is preferably used in the thermal chlorination. Commercially available chlorine containing 1000 ppm or more of oxygen may also be used as it is.

In the step 1, when the temperature of the reaction solution reaches 55°C to 70°C, chlorine is introduced into the reaction vessel to initiate thermal chlorination.

When the temperature of the reaction solution is lower than 55°C, thermal chlorination hardly progresses, which is inefficient. When the temperature of the reaction solution is higher than 70°C, the resulting chlorinated polyvinyl chloride has lower thermal stability, producing an article with lower transparency.

The temperature is preferably 57°C to 67°C.

The present invention next includes the step 2 of raising the temperature of the reaction solution while maintaining the temperature inside the reaction vessel not higher than the glass transition temperature of a partially chlorinated polyvinyl chloride.

In the step 2, thermal chlorination is carried out while the temperature is maintained at a predetermined temperature.

The "partially chlorinated polyvinyl chloride" as used herein refers to a chlorinated polyvinyl chloride during the chlorination.

The "glass transition temperature of the partially chlorinated polyvinyl chloride" as used herein refers to the glass transition temperature estimated from the chlorine content.

In the step 2, an exemplary method of raising the temperature of the reaction solution while maintaining the temperature inside the reaction vessel not higher than the glass transition temperature of the partially chlorinated polyvinyl chloride includes determining the glass transition temperature based on measurement of the chlorine content of the partially chlorinated polyvinyl chloride in the reaction vessel and raising the temperature of the reaction solution while maintaining the temperature inside the reaction vessel not higher than the glass transition temperature.

In the step 2, the temperature of the reaction solution is raised while the temperature inside the reaction vessel is maintained not higher than the glass transition temperature of the partially chlorinated polyvinyl chloride. Preferably, the temperature is maintained not higher than (the glass transition temperature of the partially chlorinated polyvinyl chloride) - 2°C.

The time required for the step 2 (also referred to as heat-up time) preferably corresponds to 5 to 40% of the total time required for the chlorination reaction. Setting the heat-up time within the above range allows chlorination to progress uniformly, leading to production of a chlorinated polyvinyl chloride excellent in thermal stability.

The present invention includes the step 3 of carrying out thermal chlorination at a predetermined temperature of 85°C or higher but lower than 115°C after the chlorine content of the partially chlorinated polyvinyl chloride reaches 58% by weight or higher.

The step 3 improves the thermal stability of the resulting chlorinated polyvinyl chloride, and such a chlorinated polyvinyl chloride can provide an article excellent in transparency.

The "predetermined temperature of 85°C or higher but lower than 115°C" herein is also referred to as a "thermal chlorination temperature".

In the step 3, thermal chlorination is carried out at a predetermined temperature of 85°C or higher but lower than 115°C after the chlorine content of the partially chlorinated polyvinyl chloride reaches 58% by weight or higher. When thermal chlorination is carried out at a temperature equal to or higher than the glass transition temperature of the partially chlorinated polyvinyl chloride under chlorination, the resulting chlorinated polyvinyl chloride tends to have poor thermal stability and provides an article with lower transparency. Accordingly, thermal chlorination is preferably carried out at a temperature not higher than the glass transition temperature of the partially chlorinated polyvinyl chloride even after the chlorine content reaches 58% by weight or higher.

In the step 3, thermal chlorination is carried out at the predetermined temperature after the chlorine content of the partially chlorinated polyvinyl chloride reaches 58% by weight or higher.

When thermal chlorination is carried out at the predetermined temperature before the chlorine content reaches 58% by weight, the reaction rapidly progresses, leading to a non-uniform chlorination reaction. In the step 3, the chlorine content is preferably 72% by weight or lower.

In the step 3, the chlorine content of the partially chlorinated polyvinyl chloride is not particularly limited as long as it is 58% by weight or higher. The thermal chlorination is preferably carried out at a predetermined temperature of 85°C or higher but lower than 95°C after the chlorine content of the partially chlorinated polyvinyl chloride reaches 58% by weight or higher but lower than 60% by weight (step 3-1).

Also, in the step 3, the thermal chlorination is preferably carried out at a predetermined temperature of 95°C or higher but lower than 105°C after the chlorine content of the partially chlorinated polyvinyl chloride reaches 60% by weight or higher but lower than 62% by weight (step 3-2).

Moreover, in the step 3, the thermal chlorination is preferably carried out at a predetermined temperature of 105°C or higher but lower than 115°C after the chlorine content of the partially chlorinated polyvinyl chloride reaches 62% by weight or higher (step 3-3).

When the thermal chlorination temperature is changed in accordance with the chlorine content as above, though the heat-up time becomes longer, the thermal chlorination speed becomes faster as the thermal chlorination temperature is increased. As a result, the total thermal chlorination time is shortened. Even when the thermal chlorination temperature is increased, the thermal stability (initial discoloration resistance, heat-resistant stability) of the obtained chlorinated polyvinyl chloride is not lowered.

Only one of the step 3-1, the step 3-2, and the step 3-3 may be carried out, or two or more thereof may be carried out in combination.

In the steps 1-3 of the present invention, the net stirring power (Pv) in the reaction vessel is 0.2 to 2.5 kw/m³ per 1 m³ of the reaction solution.

When the net stirring power is less than 0.2 kw/m³, stirring is insufficient so that the temperature in the vicinity of the jacket is different from the temperature in the center, resulting in a non-uniform chlorination reaction. When the net stirring power is more than 2.5 kw/m³, stirring is too vigorous so that air bubbles are mixed in the solution, resulting in a non-uniform chlorination reaction. The net stirring power is preferably 0.3 to 2.0 kw/m³ per 1 m³ of the reaction solution.

The net stirring power (Pv) is represented by the equation "Pv = (Np × ρn³d⁵/10²) × v × gc".

In the equation, Np represents a power number, ρ represents a density (kg/m³) of the contents in the reaction vessel, n represents a rotation number (1/sec.) of a stirring blade, d represents a blade length (m), v represents a fluid volume (m³) in the reaction vessel, and gc represents a gravitational conversion factor.

Commonly, Pv at a constant rotation number is first increased along with the viscosity increase of the system after initiation of polymerization and then becomes constant. Here, the increase in the Pv is very small. The rotation number may be constant or changed during the reaction, provided that the net stirring power in the steps 1 to 3 is maintained within a range of 0.2 to 2.5 kw/m³.

Examples of a stirring blade used for stirring in the present invention include a twisted-lattice blade, double helical blade, a ribbon blade, and a paddle blade. Preferred among these are a twisted-lattice blade (e.g., product of Hitachi, Ltd.) and a double helical blade. A twisted-lattice blade does not have a shaft (main axis) that has no direct effect on stirring, and therefore, retention of the system around the shaft does not occur. Moreover, the higher the viscosity of the polymerization solution is, the shorter the retention time becomes. As a result, efficient stirring can be achieved.

In the present invention, hydrogen peroxide may be added for the purpose of accelerating the speed of thermal chlorination to shorten the reaction time. However, addition of the hydrogen peroxide during the temperature increase may accelerate the reaction speed to raise the temperature, resulting in difficulty in controlling the reaction temperature.

Accordingly, the hydrogen peroxide is preferably added after the chlorine content of the partially chlorinated polyvinyl chloride in the reaction vessel reaches 58% by weight or higher.

The addition rate of the hydrogen peroxide is preferably 3 to 40 ppm/Hr relative to the vinyl chloride resin. When the addition rate is lower than 3 ppm/Hr, the effect of accelerating the reaction speed may not be exerted. When the addition rate is higher than 40 ppm/Hr, the obtained chlorinated polyvinyl chloride may have poor thermal stability.

The hydrogen peroxide may be added continuously or intermittently.

The total added amount of the hydrogen peroxide is preferably 10 to 300 ppm, more preferably 20 to 200 ppm relative to the vinyl chloride resin. When the total added amount of the hydrogen peroxide is less than 10 ppm, the effect of accelerating the reaction speed may not be exerted. When the total added amount of the hydrogen peroxide is more than 300 ppm, the thermal stability may be lowered.

In the present invention, the time required for the steps 1 to 3 (also referred to as the total thermal chlorination time) is preferably 6 to 12 hours. The total thermal chlorination time set within the above range enables uniform chlorination and efficient production of a resin.

After the steps 1 to 3 in the present invention, when the chlorine content of the chlorinated polyvinyl chloride reaches a predetermined value, preferably, residual chlorine is discharged and the system is cooled to terminate the chlorination reaction.

The obtained slurry containing a chlorinated polyvinyl chloride is washed with water for removal of hydrochloric acid, and blended with a neutralizer, if needed, dehydrated, and dried to give chlorinated polyvinyl chloride powder with a predetermined chlorine content.

A chlorinated polyvinyl chloride can be obtained by the method for producing a chlorinated polyvinyl chloride of the present invention. Moreover, a chlorinated polyvinyl chloride composition and a chlorinated polyvinyl chloride article can be obtained from such a chlorinated polyvinyl chloride.

The present invention also encompasses such a chlorinated polyvinyl chloride article.

The chlorinated polyvinyl chloride article of the present invention preferably contains 80 to 95% by weight of the chlorinated polyvinyl chloride. With this configuration, the article can have excellent heat-resistant stability.

The chlorinated polyvinyl chloride article of the present invention preferably has a transparency of 1 to 10 in the shape of a 5-mm-thick plate. Such an article can be favorably used for industrial plates or pipes required to have transparency.

The transparency can be measured, for example, with a haze meter.

### - Advantageous Effects of Invention

The present invention can provide a method for producing a chlorinated polyvinyl chloride that has high initial discoloration resistance and heat-resistant stability to be excellent in thermal stability and is capable of providing a transparent article.

### DESCRIPTION OF EMBODIMENTS

Embodiments of the present invention are more specifically described in the following with reference to, but not limited to, examples.

### (Example 1)

A 300-L glass-lined reaction vessel was charged with 200 kg of deionized water and 56 kg of a vinyl chloride resin having an average degree of polymerization of 600. The contents were stirred to give an aqueous suspension in which the vinyl chloride resin was dispersed in the water. Then, the inside of the reaction vessel was heated to raise the temperature of the aqueous suspension to 70°C.

Next, the reaction vessel was decompressed for removal of oxygen (oxygen amount: 100 ppm), and chlorine (oxygen content: 50 ppm) was introduced thereinto in such a manner that the partial pressure of chlorine was set to 0.4 MPa to initiate thermal chlorination (chlorination onset temperature: 70°C).

Then, the temperature of the aqueous suspension was raised to 90°C over 1.1 hours such that the temperature did not exceed the glass transition temperature of a partially chlorinated polyvinyl chloride.

The glass transition temperature of the partially chlorinated polyvinyl chloride was obtained by differential scanning calorimetry (DSC) in conformity with JIS K7121.

Thermal chlorination was continued for 9.8 hours from introduction of chlorine (temperature at this time is referred to as a thermal chlorination temperature), while the temperature of the aqueous suspension was maintained at 90°C and the partial pressure of chlorine was maintained at 0.4 MPa after the chlorine content of the partially chlorinated polyvinyl chloride reached 58.2% by weight. Then, supply of chlorine gas was stopped to terminate thermal chlorination. The net stirring power (Pv) from the start to the end of thermal chlorination in the reaction vessel was 0.6 kw/m³.

In the thermal chlorination step, a hydrogen peroxide solution (200 ppm) was added at a rate of 15 ppm/Hr of hydrogen peroxide relative to the vinyl chloride resin after the chlorine content reached 61% by weight until the end of the chlorination reaction.

The glass transition temperature when the chlorine content of the partially chlorinated polyvinyl chloride reached 58.2% by weight was 91.1°C. That is, the temperature of the aqueous suspension in the reaction vessel was maintained not higher than the glass transition temperature of the partially chlorinated polyvinyl chloride in the reaction vessel during a period from the start of thermal chlorination until the temperature was raised to 90°C.

Next, nitrogen gas was fed thereinto for removal of unreacted chlorine. The obtained chlorinated polyvinyl chloride slurry was neutralized with sodium hydroxide, washed with water, dehydrated, and dried to give a chlorinated polyvinyl chloride in the powder form. The obtained chlorinated polyvinyl chloride had a chlorine content of 64.9% by weight.

The obtained chlorinated polyvinyl chloride was blended with a butyl tin maleate stabilizer, butyl stearate, a methyl methacrylate-butadiene-styrene (MBS) resin, and an acrylic processing aid (polymethyl methacrylate) to prepare a chlorinated polyvinyl chloride composition in which the chlorinated polyvinyl chloride content was 92.5 % by weight, the butyl tin maleate stabilizer content was 1.9% by weight, butyl stearate content was 0.5% by weight, the MBS resin content was 4.6% by weight, and the acrylic processing aid content was 0.5% by weight.

The obtained chlorinated polyvinyl chloride composition was wound around a roll at 190°C and roll-kneaded for a minute, and pre-heated for three minutes and then pressurized for four minutes in a press machine at 185°C, thereby providing a chlorinated polyvinyl chloride article in the shape of a 2-mm-thick plate.

### (Example 2)

A 300-L glass-lined reaction vessel was charged with 200 kg of deionized water and 56 kg of a vinyl chloride resin having an average degree of polymerization of 600. The contents were stirred to give an aqueous suspension in which the vinyl chloride resin was dispersed in the water. Then, the inside of the reaction vessel was heated to raise the temperature of the aqueous suspension to 70°C.

Next, the reaction vessel was decompressed for removal of oxygen (oxygen amount: 100 ppm), and chlorine (oxygen content: 50 ppm) was introduced thereinto in such a manner that the partial pressure of chlorine was set to 0.4 MPa to initiate thermal chlorination (chlorination onset temperature: 70°C).

Then, the temperature of the aqueous suspension was raised to 95°C over 1.4 hours such that the temperature did not exceed the glass transition temperature of a partially chlorinated polyvinyl chloride.

Thermal chlorination was continued for 8.2 hours from introduction of chlorine, while the temperature of the aqueous suspension was maintained at 95°C and the partial pressure of chlorine was maintained at 0.4 MPa after the chlorine content of the partially chlorinated polyvinyl chloride reached 60.7% by weight. Then, supply of chlorine gas was stopped to terminate thermal chlorination. The net stirring power (Pv) from the start to the end of thermal chlorination in the reaction vessel was 0.5 kw/m³.

In the thermal chlorination step, a hydrogen peroxide solution (200 ppm) was added at a rate of 15 ppm/Hr of hydrogen peroxide relative to the vinyl chloride resin after the chlorine content reached 61% by weight until the end of the chlorination reaction.

The glass transition temperature when the chlorine content of the partially chlorinated polyvinyl chloride reached 60.7% by weight was 105.8°C. That is, the temperature of the aqueous suspension in the reaction vessel was maintained not higher than the glass transition temperature of the partially chlorinated polyvinyl chloride in the reaction vessel during a period from the start of thermal chlorination until the temperature was raised to 95°C.

Next, nitrogen gas was fed thereinto for removal of unreacted chlorine. The obtained chlorinated polyvinyl chloride slurry was neutralized with sodium hydroxide, washed with water, dehydrated, and dried to give a chlorinated polyvinyl chloride in the powder form. The obtained chlorinated polyvinyl chloride had a chlorine content of 65.0% by weight.

A chlorinated polyvinyl chloride composition and a chlorinated polyvinyl chloride article were obtained in the same manner as in Example 1, except that the above chlorinated polyvinyl chloride was used.

### (Example 3)

A 300-L glass-lined reaction vessel was charged with 200 kg of deionized water and 56 kg of a vinyl chloride resin having an average degree of polymerization of 600. The contents were stirred to give an aqueous suspension in which the vinyl chloride resin was dispersed in the water. Then, the inside of the reaction vessel was heated to raise the temperature of the aqueous suspension to 70°C.

Next, the reaction vessel was decompressed for removal of oxygen (oxygen amount: 100 ppm), and chlorine (oxygen content: 50 ppm) was introduced thereinto in such a manner that the partial pressure of chlorine was set to 0.4 MPa to initiate thermal chlorination (chlorination onset temperature: 70°C).

Then, the temperature of the aqueous suspension was heated to 100°C over 2.0 hours such that the temperature did not exceed the glass transition temperature of a partially chlorinated polyvinyl chloride.

The glass transition temperature of the partially chlorinated polyvinyl chloride was obtained by differential scanning calorimetry (DSC) in conformity with JIS K7121.

Thermal chlorination was continued for 6.5 hours from introduction of chlorine, while the temperature of the aqueous suspension was maintained at 100°C and the partial pressure of chlorine was maintained at 0.4 MPa after the chlorine content of the partially chlorinated polyvinyl chloride reached 61% by weight. Then, supply of chlorine gas was stopped to terminate thermal chlorination. The net stirring power (Pv) from the start to the end of thermal chlorination in the reaction vessel was 1.2 kw/m³.

In the thermal chlorination step, a hydrogen peroxide solution (200 ppm) was added at a rate of 15 ppm/Hr of hydrogen peroxide relative to the vinyl chloride resin after the chlorine content reached 61% by weight until the end of the chlorination reaction.

The glass transition temperature when the chlorine content of the partially chlorinated polyvinyl chloride reached 61% by weight was 108.0°C. That is, the temperature of the aqueous suspension in the reaction vessel was maintained not higher than the glass transition temperature of the partially chlorinated polyvinyl chloride in the reaction vessel during a period from the start of thermal chlorination until the temperature was raised to 100°C.

Next, nitrogen gas was fed thereinto for removal of unreacted chlorine. The obtained chlorinated polyvinyl chloride slurry was neutralized with sodium hydroxide, washed with water, dehydrated, and dried to give a chlorinated polyvinyl chloride in the powder form. The obtained chlorinated polyvinyl chloride had a chlorine content of 64.8% by weight.

A chlorinated polyvinyl chloride composition and a chlorinated polyvinyl chloride article were obtained in the same manner as in Example 1, except that the above chlorinated polyvinyl chloride was used.

### (Example 4)

A 300-L glass-lined reaction vessel was charged with 200 kg of deionized water and 56 kg of a vinyl chloride resin having an average degree of polymerization of 600. The contents were stirred to give an aqueous suspension in which the vinyl chloride resin was dispersed in the water. Then, the inside of the reaction vessel was heated to raise the temperature of the aqueous suspension to 70°C.

Next, the reaction vessel was decompressed for removal of oxygen (oxygen amount: 100 ppm), and chlorine (oxygen content: 50 ppm) was introduced thereinto in such a manner that the partial pressure of chlorine was set to 0.4 MPa to initiate thermal chlorination (chlorination onset temperature: 70°C).

Then, the temperature of the aqueous suspension was raised to 110°C over 2.6 hours such that the temperature did not exceed the glass transition temperature of a partially chlorinated polyvinyl chloride.

The glass transition temperature of the partially chlorinated polyvinyl chloride was obtained by differential scanning calorimetry (DSC) in conformity with JIS K7121.

Thermal chlorination was continued for 4.2 hours from introduction of chlorine, while the temperature of the aqueous suspension was maintained at 110°C and the partial pressure of chlorine was maintained at 0.4 MPa after the chlorine content of the partially chlorinated polyvinyl chloride reached 62.5% by weight. Then, supply of chlorine gas was stopped to terminate thermal chlorination. The net stirring power (Pv) from the start to the end of thermal chlorination in the reaction vessel was 1.8 kw/m³.

In the thermal chlorination step, a hydrogen peroxide solution (200 ppm) was added at a rate of 15 ppm/Hr of hydrogen peroxide relative to the vinyl chloride resin after the chlorine content reached 61% by weight until the end of the chlorination reaction.

The glass transition temperature when the chlorine content of the partially chlorinated polyvinyl chloride reached 62.5% by weight was 118.6°C. That is, the temperature of the aqueous suspension in the reaction vessel was maintained not higher than the glass transition temperature of the partially chlorinated polyvinyl chloride in the reaction vessel during a period from the start of thermal chlorination until the temperature was raised to 110°C.

Next, nitrogen gas was fed thereinto for removal of unreacted chlorine. The obtained chlorinated polyvinyl chloride slurry was neutralized with sodium hydroxide, washed with water, dehydrated, and dried to give a chlorinated polyvinyl chloride in the powder form. The obtained chlorinated polyvinyl chloride had a chlorine content of 65.0% by weight.

A chlorinated polyvinyl chloride composition and a chlorinated polyvinyl chloride article were obtained in the same manner as in Example 1, except that the above chlorinated polyvinyl chloride was used.

### (Example 5)

The chlorinated polyvinyl chloride obtained in Example 1 was blended with a butyl tin maleate stabilizer, butyl stearate, a MBS resin, an acrylic processing aid to prepare a chlorinated polyvinyl chloride composition in which the chlorinated polyvinyl chloride content was 88.4% by weight, the butyl tin maleate stabilizer content was 2.6% by weight, the butyl stearate content was 0.5% by weight, the MBS resin content was 7.5% by weight, and the acrylic processing aid content was 1.0% by weight.

The obtained chlorinated polyvinyl chloride composition was wound around a roll at 190°C and roll-kneaded for a minute, and pre-heated for three minutes and then pressurized for four minutes in a press machine at 185°C, thereby providing a chlorinated polyvinyl chloride article in the shape of a 2-mm-thick plate.

### (Example 6)

The chlorinated polyvinyl chloride obtained in Example 1 was blended with polyvinyl chloride, a butyl tin maleate stabilizer, butyl stearate, a MBS resin, and an acrylic processing aid to prepare a chlorinated polyvinyl chloride composition in which the chlorinated polyvinyl chloride content was 82.5% by weight, the vinyl chloride resin content was 2.8% by weight, the butyl tin maleate stabilizer content was 1.9% by weight, the butyl stearate content was 0.5% by weight, the MBS resin content was 4.6% by weight, and the acrylic processing aid content was 1.5% by weight.

The obtained chlorinated polyvinyl chloride composition was wound around a roll at 190°C and roll-kneaded for a minute, and pre-heated for three minutes and then pressurized for four minutes in a press machine at 185°C, thereby providing a chlorinated polyvinyl chloride article in the shape of a 2-mm-thick plate.

### (Example 7)

The chlorinated polyvinyl chloride obtained in Example 1 was blended with polyvinyl chloride, a butyl tin maleate stabilizer, butyl stearate, a MBS resin, and an acrylic processing aid to prepare a chlorinated polyvinyl chloride composition in which the chlorinated polyvinyl chloride content was 78.5% by weight, the vinyl chloride resin content was 14.0% by weight, the butyl tin maleate stabilizer content was 1.9% by weight, the butyl stearate content was 0.5% by weight, the MBS resin content was 4.6% by weight, and the acrylic processing aid content was 0.5% by weight.

The obtained chlorinated polyvinyl chloride composition was wound around a roll at 190°C and roll-kneaded for a minute, and pre-heated for three minutes and then pressurized for four minutes in a press machine at 185°C, thereby providing a chlorinated polyvinyl chloride article in the shape of a 2-mm-thick plate.

### (Example 8)

The chlorinated polyvinyl chloride obtained in Example 1 was blended with a butyl tin maleate stabilizer, butyl stearate, a MBS resin, and an acrylic processing aid to prepare a chlorinated polyvinyl chloride composition in which the chlorinated polyvinyl chloride content was 95.2% by weight, the butyl tin maleate stabilizer content was 0.8% by weight, the butyl stearate content was 0.5% by weight, the MBS resin content was 3.0% by weight, and the acrylic processing aid content was 0.5% by weight.

The obtained chlorinated polyvinyl chloride composition was wound around a roll at 190°C and roll-kneaded for a minute, and pre-heated for three minutes and then pressurized for four minutes in a press machine at 185°C, thereby providing a chlorinated polyvinyl chloride article in the shape of a 2-mm-thick plate.

### (Comparative Example 1)

A 300-L glass-lined reaction vessel was charged with 200 kg of deionized water and 56 kg of a vinyl chloride resin having an average degree of polymerization of 600. The contents were stirred to give an aqueous suspension in which the vinyl chloride resin was dispersed in the water. Then, the inside of the reaction vessel was heated to raise the temperature of the aqueous suspension to 70°C.

Next, the reaction vessel was decompressed for removal of oxygen (oxygen amount: 100 ppm), and chlorine (oxygen content: 50 ppm) was introduced thereinto in such a manner that the partial pressure of chlorine was set to 0.4 MPa to initiate thermal chlorination (chlorination onset temperature: 70°C).

Then, the temperature of the aqueous suspension was raised to 95°C over 0.5 hours. At this time, the temperature inside the reaction vessel exceeded the glass transition temperature of a partially chlorinated polyvinyl chloride.

The glass transition temperature of the partially chlorinated polyvinyl chloride was obtained by differential scanning calorimetry (DSC) in conformity with JIS K7121.

Thermal chlorination was continued for 7.9 hours from introduction of chlorine, while the temperature of the aqueous suspension was maintained at 95°C and the partial pressure of chlorine was maintained at 0.4 MPa after the chlorine content of the partially chlorinated polyvinyl chloride reached 58.0% by weight. The net stirring power (Pv) from the start to the end of thermal chlorination in the reaction vessel was 0.1 kw/m³.

In the thermal chlorination step, a hydrogen peroxide solution (200 ppm) was added at a rate of 15 ppm/Hr of hydrogen peroxide relative to the vinyl chloride resin after the chlorine content reached 61% by weight until the end of the chlorination reaction.

The glass transition temperature when the chlorine content of the partially chlorinated polyvinyl chloride reached 58.0% by weight was 86.6°C. That is, the temperature of the aqueous suspension in the reaction vessel exceeded the glass transition temperature of the partially chlorinated polyvinyl chloride in the reaction vessel during a period from the start of thermal chlorination until the temperature was raised to 95°C.

Next, nitrogen gas was fed thereinto for removal of unreacted chlorine. The obtained chlorinated polyvinyl chloride slurry was neutralized with sodium hydroxide, washed with water, dehydrated, and dried to give a chlorinated polyvinyl chloride in the powder form. The obtained chlorinated polyvinyl chloride had a chlorine content of 64.8% by weight.

A chlorinated polyvinyl chloride composition and a chlorinated polyvinyl chloride article were obtained in the same manner as in Example 1, except that the above chlorinated polyvinyl chloride was used.

### (Comparative Example 2)

A 300-L glass-lined reaction vessel was charged with 200 kg of deionized water and 56 kg of a vinyl chloride resin having an average degree of polymerization of 600. The contents were stirred to give an aqueous suspension in which the vinyl chloride resin was dispersed in the water. Then, the inside of the reaction vessel was heated to raise the temperature of the aqueous suspension to 70°C.

Next, the reaction vessel was decompressed for removal of oxygen (oxygen amount: 100 ppm), and chlorine (oxygen content: 50 ppm) was introduced thereinto in such a manner that the partial pressure of chlorine was set to 0.4 MPa to initiate thermal chlorination (chlorination onset temperature: 70°C).

Then, the temperature of the aqueous suspension was raised to 100°C over 0.7 hours. At this time, the temperature inside the reaction vessel exceeded the glass transition temperature of a partially chlorinated polyvinyl chloride.

The glass transition temperature of the partially chlorinated polyvinyl chloride was obtained by differential scanning calorimetry (DSC) in conformity with JIS K7121.

Thermal chlorination was continued for 6.1 hours from introduction of chlorine, while the temperature of the aqueous suspension was maintained at 100°C and the partial pressure of chlorine was maintained at 0.4 MPa after the chlorine content of the partially chlorinated polyvinyl chloride reached 58.9% by weight. Then, supply of chlorine gas was stopped to terminate thermal chlorination. The net stirring power (Pv) from the start to the end of thermal chlorination in the reaction vessel was 2.8 kw/m³.

In the thermal chlorination step, a hydrogen peroxide solution (200 ppm) was added at a rate of 15 ppm/Hr of hydrogen peroxide relative to the vinyl chloride resin after the chlorine content reached 61% by weight until the end of the chlorination reaction.

The glass transition temperature when the chlorine content of the partially chlorinated polyvinyl chloride reached 58.9% by weight was 93.0°C. That is, the temperature of the aqueous suspension in the reaction vessel exceeded the glass transition temperature of the partially chlorinated polyvinyl chloride in the reaction vessel during a period from the start of thermal chlorination until the temperature was raised to 100°C.

Next, nitrogen gas was fed thereinto for removal of unreacted chlorine. The obtained chlorinated polyvinyl chloride slurry was neutralized with sodium hydroxide, washed with water, dehydrated, and dried to give a chlorinated polyvinyl chloride in the powder form. The obtained chlorinated polyvinyl chloride had a chlorine content of 64.9% by weight.

A chlorinated polyvinyl chloride composition and a chlorinated polyvinyl chloride article were obtained in the same manner as in Example 1, except that the above chlorinated polyvinyl chloride was used.

### (Comparative Example 3)

A 300-L glass-lined reaction vessel was charged with 200 kg of deionized water and 56 kg of a vinyl chloride resin having an average degree of polymerization of 600. The contents were stirred to give an aqueous suspension in which the vinyl chloride resin was dispersed in the water. Then, the inside of the reaction vessel was heated to raise the temperature of the aqueous suspension to 70°C.

Next, the reaction vessel was decompressed for removal of oxygen (oxygen amount: 100 ppm), and chlorine (oxygen content: 50 ppm) was introduced thereinto in such a manner that the partial pressure of chlorine was set to 0.4 MPa to initiate thermal chlorination (chlorination onset temperature: 70°C).

Then, the temperature of the aqueous suspension was raised to 110°C over 1.0 hour. At this time, the temperature inside the reaction vessel exceeded the glass transition temperature of a partially chlorinated polyvinyl chloride.

The glass transition temperature of the partially chlorinated polyvinyl chloride was obtained by differential scanning calorimetry (DSC) in conformity with JIS K7121.

Thermal chlorination was continued for 3.8 hours from introduction of chlorine, while the temperature of the aqueous suspension was maintained at 110°C and the partial pressure of chlorine was maintained at 0.4 MPa after the chlorine content of the partially chlorinated polyvinyl chloride reached 59.4% by weight. Then, supply of chlorine gas was stopped to terminate thermal chlorination. The net stirring power (Pv) from the start to the end of thermal chlorination in the reaction vessel was 3.0 kw/m³.

In the thermal chlorination step, a hydrogen peroxide solution (200 ppm) was added at a rate of 15 ppm/Hr of hydrogen peroxide relative to the vinyl chloride resin after the chlorine content reached 61% by weight until the end of the chlorination reaction.

The glass transition temperature when the chlorine content of the partially chlorinated polyvinyl chloride reached 59.4% by weight was 96.5°C. That is, the temperature of the aqueous suspension in the reaction vessel exceeded the glass transition temperature of the partially chlorinated polyvinyl chloride in the reaction vessel during a period from the start of thermal chlorination until the temperature was raised to 110°C.

Next, nitrogen gas was fed thereinto for removal of unreacted chlorine. The obtained chlorinated polyvinyl chloride slurry was neutralized with sodium hydroxide, washed with water, dehydrated, and dried to give a chlorinated polyvinyl chloride in the powder form. The obtained chlorinated polyvinyl chloride had a chlorine content of 64.0% by weight.

A chlorinated polyvinyl chloride composition and a chlorinated polyvinyl chloride article were obtained in the same manner as in Example 1, except that the above chlorinated polyvinyl chloride was used.

### (Comparative Example 4)

A 300-L glass-lined reaction vessel was charged with 200 kg of deionized water and 56 kg of a vinyl chloride resin having an average degree of polymerization of 600. The contents were stirred to give an aqueous suspension in which the vinyl chloride resin was dispersed in the water. Then, the inside of the reaction vessel was heated to raise the temperature of the aqueous suspension to 80°C.

Next, the reaction vessel was decompressed for removal of oxygen (oxygen amount: 100 ppm), and chlorine (oxygen content: 50 ppm) was introduced thereinto in such a manner that the partial pressure of chlorine was set to 0.4 MPa to initiate thermal chlorination (chlorination onset temperature: 80°C).

Then, the temperature of the aqueous suspension was raised to 90 °C over 1.1 hours such that the temperature did not exceed the glass transition temperature of a partially chlorinated polyvinyl chloride.

The glass transition temperature of the partially chlorinated polyvinyl chloride was obtained by differential scanning calorimetry (DSC) in conformity with JIS K7121.

Thermal chlorination was continued for 9.1 hours from introduction of chlorine, while the temperature of the aqueous suspension was maintained at 90°C and the partial pressure of chlorine was maintained at 0.4 MPa after the chlorine content of the partially chlorinated polyvinyl chloride reached 58.3% by weight. Then, supply of chlorine gas was stopped to terminate thermal chlorination. The net stirring power (Pv) from the start to the end of thermal chlorination in the reaction vessel was 0.6 kw/m³.

In the thermal chlorination step, a hydrogen peroxide solution (200 ppm) was added at a rate of 15 ppm/Hr of hydrogen peroxide relative to the vinyl chloride resin after the chlorine content reached 61% by weight until the end of the chlorination reaction.

The glass transition temperature when the chlorine content of the partially chlorinated polyvinyl chloride reached 58.3% by weight was 91.5°C. That is, the temperature of the aqueous suspension in the reaction vessel was maintained hot higher than the glass transition temperature of the partially chlorinated polyvinyl chloride in the reaction vessel during a period from the start of thermal chlorination until the temperature was raised to 90°C.

Next, nitrogen gas was fed thereinto for removal of unreacted chlorine. The obtained chlorinated polyvinyl chloride slurry was neutralized with sodium hydroxide, washed with water, dehydrated, and dried to give a chlorinated polyvinyl chloride in the powder form. The obtained chlorinated polyvinyl chloride had a chlorine content of 64.9% by weight.

A chlorinated polyvinyl chloride composition and a chlorinated polyvinyl chloride article were obtained in the same manner as in Example 1, except that the above chlorinated polyvinyl chloride was used.

### (Comparative Example 5)

A 300-L glass-lined reaction vessel was charged with 200 kg of deionized water and 56 kg of a vinyl chloride resin having an average degree of polymerization of 600. The contents were stirred to give an aqueous suspension in which the vinyl chloride resin was dispersed in the water. Then, the inside of the reaction vessel was heated to raise the temperature of the aqueous suspension to 70°C.

Next, the reaction vessel was decompressed for removal of oxygen (oxygen amount: 100 ppm), and chlorine (oxygen content: 50 ppm) was introduced thereinto in such a manner that the partial pressure of chlorine was set to 0.4 MPa to initiate thermal chlorination (chlorination onset temperature: 70°C).

Then, the temperature of the aqueous suspension was raised to 90°C over 1.1 hours such that the temperature did not exceed the glass transition temperature of a partially chlorinated polyvinyl chloride.

The glass transition temperature of the partially chlorinated polyvinyl chloride was obtained by differential scanning calorimetry (DSC) in conformity with JIS K7121.

Thermal chlorination was continued for 10.3 hours from introduction of chlorine, while the temperature of the aqueous suspension was maintained at 90°C and the partial pressure of chlorine was maintained at 0.4 MPa after the chlorine content of the partially chlorinated polyvinyl chloride reached 55.8% by weight. Then, supply of chlorine gas was stopped to terminate thermal chlorination. The net stirring power (Pv) from the start to the end of thermal chlorination in the reaction vessel was 0.6 kw/m³.

In the thermal chlorination step, a hydrogen peroxide solution (200 ppm) was added at a rate of 15 ppm/Hr of hydrogen peroxide relative to the vinyl chloride resin after the chlorine content reached 61% by weight until the end of the chlorination reaction.

The glass transition temperature when the chlorine content of the partially chlorinated polyvinyl chloride reached 55.8% by weight was 91.3°C. That is, the temperature of the aqueous suspension in the reaction vessel was maintained not higher than the glass transition temperature of the partially chlorinated polyvinyl chloride in the reaction vessel during a period from the start of thermal chlorination until the temperature was raised to 90°C.

Next, nitrogen gas was fed thereinto for removal of unreacted chlorine. The obtained chlorinated polyvinyl chloride slurry was neutralized with sodium hydroxide, washed with water, dehydrated, and dried to give a chlorinated polyvinyl chloride in the powder form. The obtained chlorinated polyvinyl chloride had a chlorine content of 64.8% by weight.

A chlorinated polyvinyl chloride composition and a chlorinated polyvinyl chloride article were obtained in the same manner as in Example 1, except that the above chlorinated polyvinyl chloride was used.

### <Evaluation>

The chlorinated polyvinyl chloride compositions and the chlorinated polyvinyl chloride articles obtained in the examples and the comparative examples were evaluated for the following parameters. Table 1 shows the results.

### (1) Degree of yellowness

The degree of yellowness of each obtained chlorinated polyvinyl chloride article in the shape of a 2-mm-thick plate as a test sample was measured with a colorimeter produced by Nippon Denshoku Industries Co., Ltd.

### (2) Thermal stability

Each obtained chlorinated polyvinyl chloride composition was wound around a roll at 190°C and roll-kneaded for a minute to be formed into a sheet. The sheet was heated in a gear oven at 200°C. The time (minutes) required for blackening of the sheet was measured.

### (3) Transparency

Each obtained chlorinated polyvinyl chloride composition was wound around a roll at 165°C and roll-kneaded for a minute, and pre-heated for three minutes and then pressurized for four minutes in a press machine at 165°C, thereby providing a test sample in the shape of a 5-mm-thick plate. The transparency of the obtained test sample was measured with a HAZE METER produced by Nippon Denshoku Industries Co., Ltd.

**[Table 1]**

| | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 |
|---|---|---|---|---|---|---|---|---|---|---|---|---|---|---|
| | Thermal chlorination onset temperature (°C) | 70 | 70 | 70 | 70 | 70 | 70 | 70 | 70 | 70 | 70 | 70 | 80 | 70 |
| | Heat-up time (hours) | 1.1 | 1.4 | 2 | 2.6 | 1.1 | 1.1 | 1.1 | 1.1 | 0.5 | 0.7 | 1.0 | 1.1 | 1.1 |
| Step | Thermal chlorination temperature (°C) | 90 | 95 | 100 | 110 | 90 | 90 | 90 | 90 | 95 | 100 | 110 | 90 | 90 |
| | Glass transision temperature at thermal chlorination temperature (°C) | 91.1 | 105.8 | 108 | 118.6 | 91.1 | 91.1 | 91.1 | 91.1 | 86.6 | 93 | 96.5 | 91.5 | 91.3 |
| | Chlorine content at thermal chlorination temperature (wt%) | 58.2 | 60.7 | 61 | 62.5 | 58.2 | 58.2 | 58.2 | 58.2 | 58 | 58.9 | 59.4 | 58.3 | 55.8 |
| | Net stirring power (kw/m³) | 0.6 | 0.5 | 1.2 | 1.8 | 0.6 | 0.6 | 0.6 | 0.6 | 0.1 | 2.8 | 3.0 | 0.6 | 0.6 |
| | Chlorinated vinyl chloride | 92.5 | 92.5 | 92.5 | 92.5 | 88.4 | 82.5 | 78.5 | 95.2 | 92.5 | 92.5 | 92.5 | 92.5 | 92.5 |
| | Vinyl chloride | - | - | - | - | - | 2.8 | 14.0 | - | - | - | - | - | - |
| Composition (wt%) | Butyl tin maleate stabilizer | 1.9 | 1.9 | 1.9 | 1.9 | 2.6 | 1.9 | 1.9 | 0.8 | 1.9 | 1.9 | 1.9 | 1.9 | 1.9 |
| | Butyl stearate | 0.5 | 0.5 | 0.5 | 0.5 | 0.5 | 0.5 | 0.5 | 0.5 | 0.5 | 0.5 | 0.5 | 0.5 | 0.5 |
| | MBS resin | 4.6 | 4.6 | 4.6 | 4.6 | 7.5 | 4.6 | 4.6 | 3.0 | 4.6 | 4.6 | 4.6 | 4.6 | 4.6 |
| | Acrylic processing aid | 0.5 | 0.5 | 0.5 | 0.5 | 1.0 | 1.5 | 0.5 | 0.5 | 0.5 | 0.5 | 0.5 | 0.5 | 0.5 |
| | Chlorine content of chlorinated vinyl chloride resin (wt%) | 64.9 | 65.0 | 64.8 | 65.0 | 64.9 | 64.9 | 64.9 | 64.9 | 64.8 | 64.9 | 64.0 | 64.9 | 64.8 |
| Evaluation | Degree of yellowness | 26 | 24 | 22 | 24 | 24 | 23 | 25 | 30 | 31 | 30 | 30 | 36 | 38 |
| | Thermal stability (minutes) | 70 | 70 | 80 | 80 | 90 | 70 | 70 | 50 | 50 | 60 | 50 | 50 | 40 |
| | Transparency | 3.4 | 4.1 | 3.8 | 3.5 | 4.7 | 5.8 | 35.1 | 23.5 | 35.0 | 32.2 | 38.3 | 43.4 | 39.1 |

### INDUSTRIAL APPLICABILITY

The present invention can provide a method for producing a chlorinated polyvinyl chloride that has high initial discoloration resistance and heat-resistant stability to be excellent in thermal stability and is capable of providing a transparent article.

## Claims

1. A method for producing a chlorinated polyvinyl chloride through thermal chlorination of a reaction solution including a vinyl chloride aqueous suspension that contains a vinyl chloride resin in a hermetically sealable reaction vessel, the method comprising:
step 1 of initiating thermal chlorination by heating the reaction solution to 55°C to 70°C and then introducing chlorine into the reaction vessel;
step 2 of raising the temperature of the reaction solution while maintaining the temperature inside the reaction vessel not higher than the glass transition temperature of a partially chlorinated polyvinyl chloride; and
step 3 of carrying out the thermal chlorination at a predetermined temperature of 85°C or higher but lower than 115°C after the chlorine content of the partially chlorinated polyvinyl chloride reaches 58% by weight or more,
the steps 1 to 3 being performed under stirring at a net stirring power (Pv) inside the reaction vessel of 0.2 to 2.5 kw/m³ per 1 m³ of the reaction solution.

2. The method for producing a chlorinated polyvinyl chloride according to claim 1,
wherein the thermal chlorination is carried out at a predetermined temperature of 85°C or higher but lower than 95°C after the chlorine content of the partially chlorinated polyvinyl chloride reaches 58% by weight or higher but lower than 60% by weight in the step 3.

3. The method for producing a chlorinated polyvinyl chloride according to claim 1,
wherein the thermal chlorination is carried out at a predetermined temperature of 95°C or higher but lower than 105°C after the chlorine content of the partially chlorinated polyvinyl chloride reaches 60% by weight or higher but lower than 62% by weight in the step 3.

4. The method for producing a chlorinated polyvinyl chloride according to claim 1,
wherein the thermal chlorination is carried out at a predetermined temperature of 105°C or higher but lower than 115°C after the chlorine content of the partially chlorinated polyvinyl chloride reaches 62% by weight or higher in the step 3.

5. A chlorinated polyvinyl chloride article comprising a chlorinated polyvinyl chloride produced by the method for producing a chlorinated polyvinyl chloride according to claim 1.

6. The chlorinated polyvinyl chloride article according to claim 5,
which contains 80 to 95% by weight of the chlorinated polyvinyl chloride and has a transparency of 1 to 10 in a shape of a 5-mm-thick plate.
